# EUROPEAN PATENT SPECIFICATION

(11) **EP 4 046 821 B1**
(45) Date of publication and mention of the grant of the patent: **25.10.2023**
(21) Application number: 22156184.8
(22) Date of filing: 10.02.2022
(51) Int. Cl.: B60C 7/14

(54) **AIRLESS TIRE**
LUFTLOSER REIFEN
PNEU SANS AIR

(30) Priority: 18.02.2021 JP 2021024581
(43) Date of publication of application: 24.08.2022
(73) Proprietor: Sumitomo Rubber Industries, Ltd., Kobe-shi, Hyogo-ken 651-0072 (JP)
(72) Inventor: YAMANE, Masakatsu, Kobe-shi, 651-0072 (JP)
(74) Representative: Manitz Finsterwald Patent- und Rechtsanwaltspartnerschaft mbB

(56) References cited:
- CN-U- 212 446 976
- JP-A- 2020 125 086
- KR-A- 20180 025 728
- US-A1- 2015 283 851
- US-A1- 2017 157 984
- US-A1- 2018 222 254
- US-B2- 9 969 219

## Description

### BACKGROUND OF THE INVENTION

### Field of the Invention

The present invention relates to an airless tire that can support a load by its own structure without using high-pressure air.

### Background Art

Conventionally, various airless tires in which a tread ring and a hub are connected by spokes have been known. For example, Japanese Laid-Open Patent Publication No. 2016-130071 proposes an airless tire that suppresses damage to spoke plate portions, of a spoke, formed in an S-shape, by specifying the thicknesses of the spoke plate portions.

KR 10-2018-0025728 A discloses an airless tire according to the preamble of claim 1. The airless tire has a hub, a tread ring and a plurality of spokes extending therebetween. The spokes are S-shaped and have bend portions bending convexly to opposite sides in the circumferential direction.

However, in the airless tire of Japanese Laid-Open Patent Publication No. 2016-130071, when large deformation occurs in the spoke plate portions, such as when passing through a step, the spoke plate portions may become deformed to one side and the other side in the tire circumferential direction, so that the spoke plate portions may come into contact with each other and become damaged.

The present invention has been made in view of the above circumstances, and a main object of the present invention is to provide an airless tire that can suppress damage to spoke plates to improve durability.

### SUMMARY OF THE INVENTION

The present invention is directed to an airless tire including: a tread ring having a ground-contact surface; a hub disposed inward of the tread ring in a tire radial direction and to be fixed to an axle; and a spoke for connecting the tread ring and the hub, wherein the spoke includes a plurality of spoke plates, each of the spoke plates has a first end portion extending in the tire radial direction on one end side in a tire axial direction, a second end portion extending in the tire radial direction on another end side in the tire axial direction, a spoke width measured along a surface of the spoke plate from the first end portion to the second end portion at the same position in the tire radial direction, and a spoke thickness orthogonal to the spoke width and the surface of the spoke plate, each of the spoke plates includes a first curved portion curved so as to project to one side in a tire circumferential direction on the hub side, and a second curved portion curved so as to project to another side in the tire circumferential direction on the tread ring side, as viewed in a direction of the spoke width, and an amplitude of the first curved portion to a reference line between a radial end of the spoke plate in an inner end portion of the spoke plate, which is an end portion on the hub side, and the other radial end of the spoke plate in an outer end portion of the spoke plate, which is an end portion on the tread ring side, and an amplitude of the second curved portion to the reference line are different from each other. A radius of curvature of the second curved portion is equal to a radius of curvature of the first curved portion.

In the airless tire according to the present invention, preferably, the amplitude of the first curved portion is uniform in an entire range of the spoke width, and the amplitude of the second curved portion is uniform in the entire range of the spoke width.

In the airless tire according to the present invention, preferably, the amplitude of the second curved portion is larger than the amplitude of the first curved portion.

In the airless tire according to the present invention, preferably, a center line of the spoke thickness in the inner end portion and the center line of the spoke thickness in the outer end portion each extend so as to be parallel to the tire radial direction at an inner end in the inner end portion and at an outer end in the outer end portion.

In the airless tire according to the present invention, preferably, the center line of the spoke thickness at the inner end in the inner end portion and the center line of the spoke thickness at the outer end in the outer end portion are located on the same straight line as viewed in the direction of the spoke width.

In the airless tire according to the present invention, preferably, the inner end portion extends so as to be inclined relative to the tire axial direction, and the outer end portion extends so as to be inclined relative to the tire axial direction in the same direction as the inner end portion.

In the airless tire according to the present invention, preferably, each of the spoke plates is indirectly or directly connected to the tread ring and the hub.

In the airless tire according to the present invention, preferably, the spoke is formed from a polymer material.

In the airless tire according to the present invention, preferably, the polymer material is selected from a single elastomer, a composite elastomer containing two or more elastomers, and a fiber-containing elastomer.

In the airless tire according to the present invention, each of the spoke plates includes a first curved portion curved so as to project to one side in the tire circumferential direction on the hub side, and a second curved portion curved so as to project to another side in the tire circumferential direction on the tread ring side, as viewed in the direction of the spoke width, and the amplitude of the first curved portion and the amplitude of the second curved portion are different from each other.

Such a spoke plate can limit the direction of deformation occurring when large compressive force is applied to the spoke plate such as when passing through a step, to the side where a curved portion having a larger amplitude, out of the first curved portion and the second curved portion, is present. Accordingly, even when passing through a step, the spoke can suppress contact between the spoke plates adjacent to each other in the tire circumferential direction due to deformation. Therefore, the airless tire according to the present invention can suppress damage to the spoke plates to improve durability.

### BRIEF DESCRIPTION OF THE DRAWINGS

FIG. 1 is a perspective view showing an embodiment of the airless tire according to the present invention;
FIG. 2 is a side view of the airless tire;
FIG. 3 is a cross-sectional view taken along a line A-A in FIG. 2;
FIG. 4 is an end view of a spoke plate as viewed in the direction of a spoke width; and
FIG. 5 is a cross-sectional view taken along a line B-B in FIG. 2.

### DETAILED DESCRIPTION

Hereinafter, an embodiment of the present invention will be described in detail with reference to the drawings.

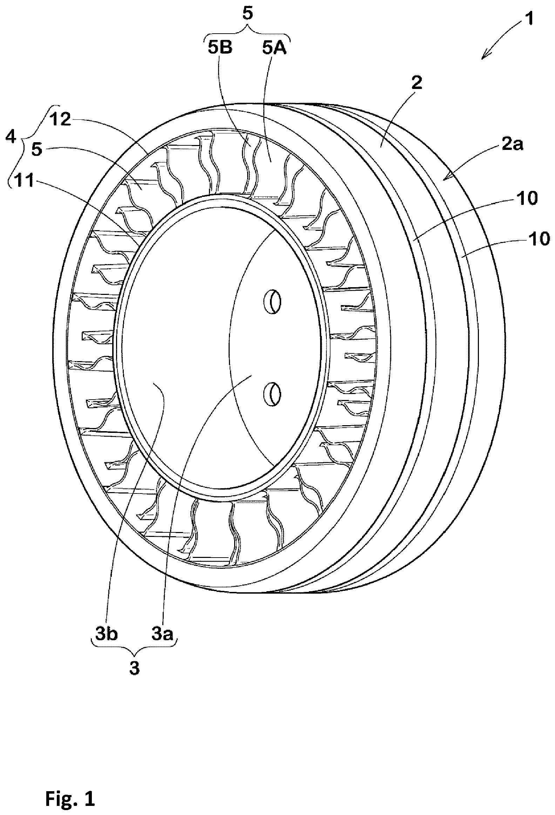

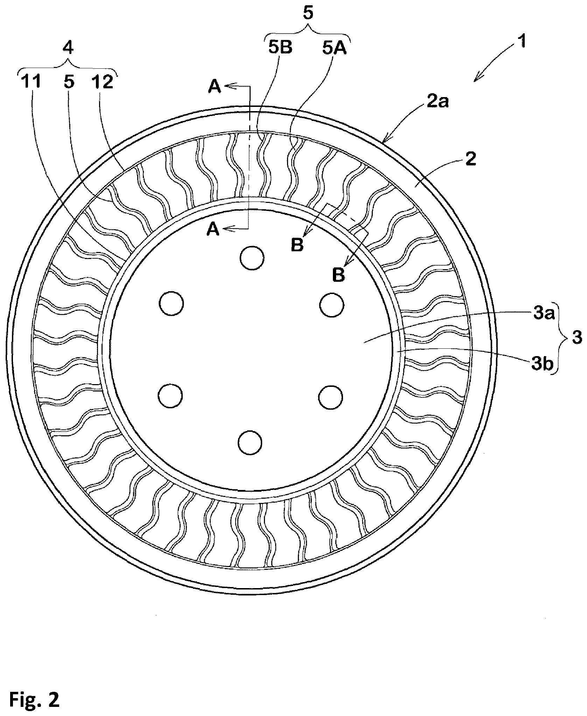

FIG. 1 is a perspective view showing an airless tire 1 according to the present embodiment, and FIG. 2 is a side view of the airless tire 1. As shown in FIG. 1 and FIG. 2, the airless tire 1 according to the present embodiment includes a tread ring 2 having a ground-contact surface 2a, a hub 3 disposed inward of the tread ring 2 in the tire radial direction, and a spoke 4 for connecting the tread ring 2 and the hub 3.

The hub 3 preferably includes a fixed portion 3a which is fixed to an axle (not shown) of a vehicle. Such an airless tire 1 can support a load applied to the tread ring 2, by the hub 3 and the spoke 4 without using high-pressure air. Therefore, the airless tire 1 according to the present embodiment has no risk of a puncture.

The spoke 4 of the present embodiment includes a plurality of spoke plates 5 each having a larger width in the tire axial direction than the thickness in the tire circumferential direction thereof. In such a spoke 4, when a load is applied to the tread ring 2, tensile force is applied to the spoke plates 5 that are located above the hub 3, and compressive force is applied to the spoke plates 5 that are located below the hub 3, whereby the spoke 4 can support the load.

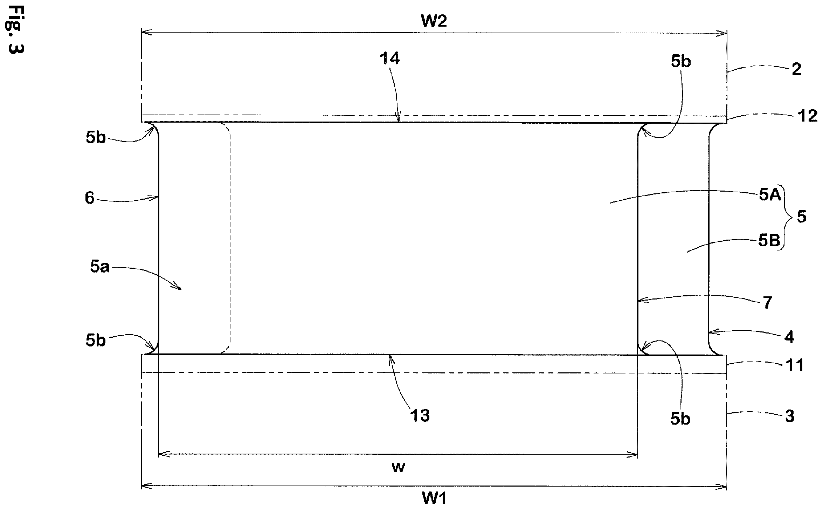

FIG. 3 is a cross-sectional view taken along a line A-A in FIG. 2. As shown in FIG. 3, each spoke plate 5 of the present embodiment has a first end portion 6 which extends in the tire radial direction on one end side in the tire axial direction, and a second end portion 7 which extends in the tire radial direction on the other end side in the tire axial direction. Accordingly, each spoke plate 5 of the present embodiment has a spoke width w measured along a surface 5a of the spoke plate 5 from the first end portion 6 to the second end portion 7 at the same position in the tire radial direction.

The spoke width w of each spoke plate 5 is preferably smaller than a width W1 of the hub 3 and a width W2 of the tread ring 2. Such a spoke plate 5 serves to achieve weight reduction and can improve the low fuel consumption performance of the airless tire 1.

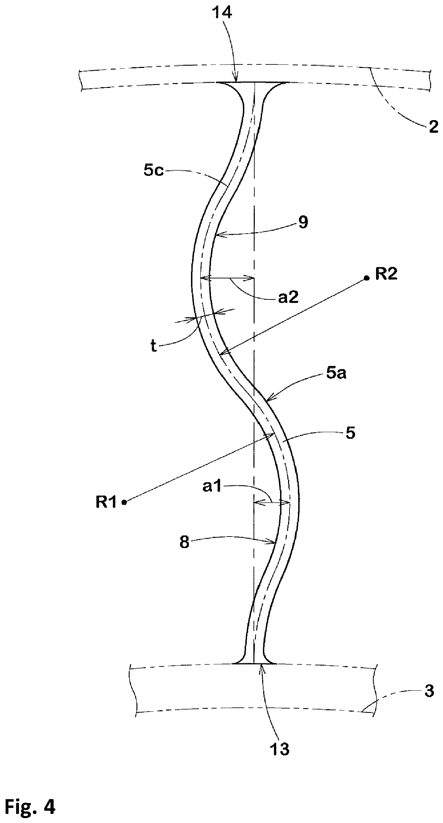

FIG. 4 is an end view of the spoke plate 5 as viewed in the direction of the spoke width w. As shown in FIG. 3 and FIG. 4, each spoke plate 5 of the present embodiment has a spoke thickness t orthogonal to the spoke width w and the surface 5a of the spoke plate 5.

Each spoke plate 5 of the present embodiment includes a first curved portion 8 which is curved so as to project to one side in the tire circumferential direction on the hub 3 side, and a second curved portion 9 which is curved so as to project to the other side in the tire circumferential direction on the tread ring 2 side, as viewed in the direction of the spoke width w. Such a spoke plate 5 can improve the ride comfort of the airless tire 1 by the first curved portion 8 and the second curved portion 9.

An amplitude a1 of the first curved portion 8 and an amplitude a2 of the second curved portion 9 of the present embodiment are different from each other. Such a spoke plate 5 can limit the direction of deformation occurring when large compressive force is applied to the spoke plate 5, such as when passing through a step, to the side where a curved portion having a larger amplitude, out of the first curved portion 8 and the second curved portion 9, is present. Accordingly, even when passing through a step, the spoke 4 can suppress contact between the spoke plates 5 adjacent to each other in the tire circumferential direction due to deformation. Therefore, the airless tire 1 according to the present embodiment can suppress damage to the spoke plates 5 to improve durability.

As a more preferable mode, the absolute value Ia2 - a1| of the difference between the amplitude a1 of the first curved portion 8 and the amplitude a2 of the second curved portion 9 is 1 to 3 mm. When the absolute value Ia2 - a1| of the difference is not less than 1 mm, the direction of deformation occurring when large compressive force is applied to the spoke plate 5 can be reliably limited to the side where the curved portion having a larger amplitude is present. When the absolute value Ia2 - a1| of the difference is not greater than 3 mm, strain occurring on the side where the curved portion having a larger amplitude is present can be reduced.

The amplitude a2 of the second curved portion 9 is preferably larger than the amplitude a1 of the first curved portion 8. The amplitude a2 of the second curved portion 9 of the present embodiment is larger than the amplitude a1 of the first curved portion 8 by 1 to 3 mm. Such a spoke plate 5 has a good vibration absorbing effect by increasing the deformation of the second curved portion 9 which is located on the outer side in the tire radial direction, and can improve the ride comfort of the airless tire 1.

A radius of curvature R2 of the second curved portion 9 is equal to a radius of curvature R1 of the first curved portion 8. Such a spoke plate 5 can limit the direction of deformation occurring when compressive force is applied thereto, to the direction based on amplitude. In addition, the spoke plate 5 can distribute strain occurring when compressive force is applied thereto, to the first curved portion 8 and the second curved portion 9, and can further improve the durability of the airless tire 1.

The amplitude a1 of the first curved portion 8 of the present embodiment is uniform in the entire range of the spoke width w. In addition, the amplitude a2 of the second curved portion 9 of the present embodiment is uniform in the entire range of the spoke width w. Such a spoke plate 5 can distribute strain occurring when compressive force is applied thereto, in the direction of the spoke width w, and can further improve the durability of the airless tire 1.

As shown in FIG. 1 and FIG. 2, the tread ring 2 is formed of, for example, an elastic body such as rubber in a cylindrical shape. The tread ring 2 preferably has a plurality of grooves 10 formed on the ground-contact surface 2a which comes into contact with a road surface during running. The ground-contact surface 2a is not limited to such a mode, and, for example, the ground-contact surface 2a may have a block shape, or a plurality of recesses may be formed thereon.

The hub 3 is formed of, for example, an inelastic body such as metal. The hub 3 preferably includes the disk-shaped fixed portion 3a which is fixed to an axle, and a cylindrical portion 3b which is connected to the spoke 4. The fixed portion 3a of the hub 3 has, for example, a plurality of fixing holes formed therein. The fixed portion 3a of the hub 3 is not limited to such a mode, and may be, for example, attachable to a dedicated axle through one-touch operation.

The spoke 4 is formed from, for example, a polymer material having elasticity. The polymer material is preferably selected from a single elastomer, a composite elastomer containing two or more elastomers, and a fiber-containing elastomer. Such a spoke 4 has excellent balance between weight reduction, flexibility, and strength, and serves to improve the low fuel consumption performance, the ride comfort, and the durability of the airless tire 1 in a well-balanced manner.

The spoke 4 of the present embodiment includes the plurality of spoke plates 5, an inner cylindrical portion 11 which is connected to the hub 3, and an outer cylindrical portion 12 which is connected to the tread ring 2. Accordingly, each spoke plate 5 is indirectly connected to the tread ring 2 and the hub 3.

Such a spoke 4 can be firmly connected to the hub 3 and the tread ring 2 and can improve the durability of the airless tire 1. In the spoke 4, for example, the inner cylindrical portion 11 and the outer cylindrical portion 12 may be omitted, and each spoke plate 5 may be directly connected to the tread ring 2 and the hub 3.

As shown in FIG. 3, each spoke plate 5 of the present embodiment includes an inner end portion 13 which is an end portion on the hub 3 side, and an outer end portion 14 which is an end portion on the tread ring 2 side. In the spoke plate 5, for example, the inner end portion 13 is integrally formed with the inner cylindrical portion 11 via curved surface portions 5b. In addition, in the spoke plate 5, for example, the outer end portion 14 is integrally formed with the outer cylindrical portion 12 via curved surface portions 5b.

In the case where the inner cylindrical portion 11 and the outer cylindrical portion 12 are omitted, in each spoke plate 5, the inner end portion 13 and the outer end portion 14 are preferably connected to the tread ring 2 and the hub 3 via the curved surface portions 5b, respectively. Such curved surface portions 5b can reduce strain occurring in the inner end portion 13 and the outer end portion 14, and can further improve the durability of the airless tire 1.

As shown in FIG. 4, a center line 5c of the spoke thickness t in the inner end portion 13 of the present embodiment extends so as to be parallel to the tire radial direction. The center line 5c of the spoke thickness t in the outer end portion 14 of the present embodiment also extends so as to be parallel to the tire radial direction, similar to that in the inner end portion 13. Such a spoke plate 5 can reduce strain occurring when tensile force is applied thereto, and can further improve the durability of the airless tire 1.

The center line 5c of the spoke thickness t in the inner end portion 13 and the center line 5c of the spoke thickness t in the outer end portion 14 are preferably located on the same straight line as viewed in the direction of the spoke width w. Such a spoke plate 5 can limit the direction of deformation occurring when compressive force is applied thereto, to the direction based on amplitude. In addition, such a spoke plate 5 can reduce strain occurring when compressive force is applied thereto, and can further improve the durability of the airless tire 1.

As shown in FIG. 1 and FIG. 3, the spoke plates 5 of the present embodiment include first spoke plates 5A which are disposed on one side in the tire axial direction, and second spoke plates 5B which are disposed on the other side in the tire axial direction. The first spoke plates 5A and the second spoke plates 5B are, for example, alternately disposed in the tire circumferential direction. Such spoke plates 5 can achieve both weight reduction and balance in the tire axial direction, and can achieve both desired low fuel consumption performance and desired steering stability of the airless tire 1.

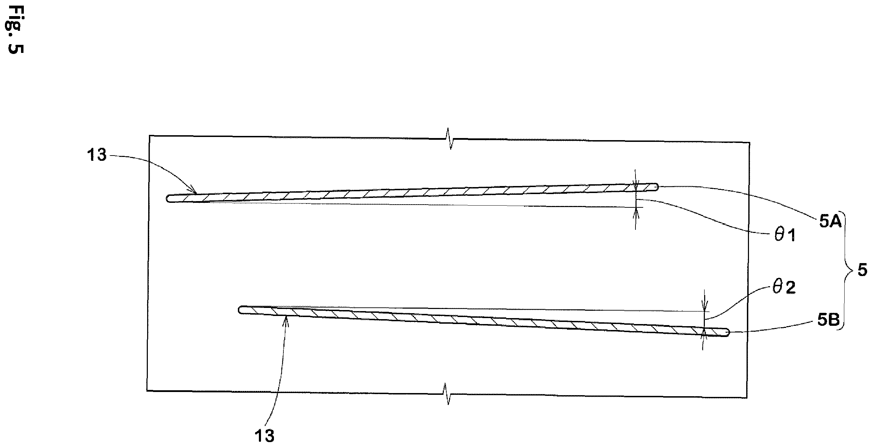

FIG. 5 is a cross-sectional view taken along a line B-B in FIG. 2. As shown in FIG. 5, the inner end portion 13 of the present embodiment extends so as to be inclined relative to the tire axial direction. In addition, although not shown, the outer end portion 14 preferably extends so as to be inclined relative to the tire axial direction in the same direction as the inner end portion 13.

Inclination angles of the inner end portion 13 and the outer end portion 14 with respect to the tire axial direction are preferably 2 to 10°. When the inclination angles are not less than 2°, the stiffness in the tire circumferential direction can be improved, and the durability of the airless tire 1 can be improved. When the inclination angles are not greater than 10°, excessive stiffness in the tire circumferential direction can be suppressed, and the ride comfort of the airless tire 1 can be improved.

The inner end portion 13 of each first spoke plate 5A and the inner end portion 13 of each second spoke plate 5B are preferably inclined relative to the tire axial direction in directions opposite to each other. Such a spoke 4 has good balance in the tire axial direction and can improve the ride comfort of the airless tire 1.

An angle θ1 of the inner end portion 13 of each first spoke plate 5A with respect to the tire axial direction and an angle θ2 of the inner end portion 13 of each second spoke plate 5B with respect to the tire axial direction are preferably equal to each other. Such a spoke 4 has good balance in the tire axial direction and can improve the ride comfort of the airless tire 1. The angle θ1 of the inner end portion 13 of each first spoke plate 5A with respect to the tire axial direction and the angle θ2 of each inner end portion 13 of the second spoke plate 5B with respect to the tire axial direction may be, for example, different from each other.

Although the particularly preferred embodiments of the present invention have been described in detail above, the present invention is not limited to the above-described embodiments, and various modifications can be made to implement the present invention.

### EXAMPLES

Airless tires having the basic structure in FIG. 1 to FIG. 5 were produced as test tires on the basis of specifications in Table 1, and were tested for durability. The main common specifications and the test method are as follows.

### <Common Specifications>

Tread ring width: 165 mm
Tread ring outer diameter: 502 mm
Tread ring inner diameter: 489 mm
Hub outer diameter: 304 mm
Number of spoke plates: 20 pairs
Inclination angle of each spoke plate end portion: 2°

### <Durability>

Using a drum tester, each tire was caused to run under the conditions of a load of 3.8 kN and a speed of 60 km/h. After 24 hours, the running was stopped, and the degree of rubbing of the spoke was visually confirmed. The results are indexes with the result of a comparative example being regarded as 100. A higher value indicates that the rubbing of the spoke is smaller and that the durability is better.

The results of the test are shown in Table 1.

**[Table 1]**

| | Comparative Example | Example 1 | Example 2 | Example 3 |
|---|---|---|---|---|
| Difference (a2 - a1) between amplitude a1 of first curved portion 8 and amplitude a2 of second curved portion 9 (mm) | 0 | 1 | 2 | 3 |
| Durability (index) | 100 | 110 | 115 | 105 |

As a result of the test, it is confirmed that the airless tire of each Example has a smaller degree of rubbing and has improved durability as compared to the comparative example.

## Claims

1. An airless tire (1) comprising:
a tread ring (2) having a ground-contact surface (2a);
a hub (3) disposed inward of the tread ring (2) in a tire radial direction and to be fixed to an axle; and
a spoke (4) for connecting the tread ring (2) and the hub (3), wherein
the spoke (4) includes a plurality of spoke plates (5),
each of the spoke plates (5) has a first end portion (6) extending in the tire radial direction on one end side in a tire axial direction, a second end portion (7) extending in the tire radial direction on another end side in the tire axial direction, a spoke width (w) measured along a surface (5a) of the spoke plate (5) from the first end portion (6) to the second end portion (7) at the same position in the tire radial direction, and a spoke thickness (t) orthogonal to the spoke width (w) and the surface (5a) of the spoke plate (5),
each of the spoke plates (5) includes a first curved portion (8) curved so as to project to one side in a tire circumferential direction on the hub (3) side, and a second curved portion (9) curved so as to project to another side in the tire circumferential direction on the tread ring (2) side, as viewed in a direction of the spoke width (w), and
an amplitude (a1) of the first curved portion (8) to a reference line between a radial end of the spoke plate (5) in an inner end portion (13) of the spoke plate (5), which is an end portion on the hub side, and the other radial end of the spoke plate (5) in an outer end portion (14) of the spoke plate(5), which is an end portion on the tread ring side, and an amplitude (a2) of the second curved portion (9) to the reference line are different from each other,
**characterized in that** a radius of curvature (R2) of the second curved portion (9) is equal to a radius of curvature (R1) of the first curved portion (8).

2. The airless tire (1) according to claim 1, wherein
the amplitude (a1) of the first curved portion (8) is uniform in an entire range of the spoke width (w), and
the amplitude (a2) of the second curved portion (9) is uniform in the entire range of the spoke width (w).

3. The airless tire (1) according to claim 1, wherein the amplitude (a2) of the second curved portion (9) is larger than the amplitude (a1) of the first curved portion (8).

4. The airless tire (1) according to any one of claims 1 to 3, wherein
a center line (5c) of the spoke thickness (t) in the inner end portion (13) and the center line (5c) of the spoke thickness (t) in the outer end portion (14) each extend so as to be parallel to the tire radial direction at an inner end in the inner end portion (13) and at an outer end in the outer end portion (14).

5. The airless tire (1) according to claim 4, wherein the center line (5c) of the spoke thickness (t) at the inner end in the inner end portion (13) and the center line (5c) of the spoke thickness (t) at the outer end in the outer end portion (14) are located on the same straight line as viewed in the direction of the spoke width (w).

6. The airless tire (1) according to claim 4 or 5, wherein
the inner end portion (13) extends so as to be inclined relative to the tire axial direction, and
the outer end portion (14) extends so as to be inclined relative to the tire axial direction in the same direction as the inner end portion (13).

7. The airless tire (1) according to any one of claims 1 to 6, wherein each of the spoke plates (5) is indirectly or directly connected to the tread ring (2) and the hub (3).

8. The airless tire (1) according to any one of claims 1 to 7, wherein the spoke (4) is formed from a polymer material.

9. The airless tire (1) according to claim 8, wherein the polymer material is selected from a single elastomer, a composite elastomer containing two or more elastomers, and a fiber-containing elastomer.

## Patentansprüche

1. Luftloser Reifen (1), umfassend:
einen Laufflächenring (2) mit einer Bodenkontaktfläche (2a);
eine Nabe (3), die innerhalb des Laufflächenrings (2) in einer Reifenradialrichtung angeordnet und an einer Achse zu befestigen ist; und
eine Speiche (4) zum Verbinden des Laufflächenrings (2) und der Nabe (3), wobei
die Speiche (4) eine Vielzahl von Speichenplatten (5) aufweist,
jede der Speichenplatten (5) einen ersten Endabschnitt (6), der sich in der Reifenradialrichtung an einer Endseite in einer Reifenaxialrichtung erstreckt, einen zweiten Endabschnitt (7), der sich in der Reifenradialrichtung an einer anderen Endseite in der Reifenaxialrichtung erstreckt, eine Speichenbreite (w), die entlang einer Oberfläche (5a) der Speichenplatte (5) von dem ersten Endabschnitt (6) zu dem zweiten Endabschnitt (7) an der gleichen Position in der Reifenradialrichtung gemessen ist, und eine Speichendicke (t) orthogonal zu der Speichenbreite (w) und der Oberfläche (5a) der Speichenplatte (5) aufweist,
jede der Speichenplatten (5) einen ersten gekrümmten Abschnitt (8) umfasst, der so gekrümmt ist, dass er zu einer Seite in einer Reifenumfangsrichtung auf der Seite der Nabe (3) vorsteht, und einen zweiten gekrümmten Abschnitt (9), der so gekrümmt ist, dass er zu einer anderen Seite in der Reifenumfangsrichtung auf der Seite des Laufflächenrings (2) vorsteht, wie in einer Richtung der Speichenbreite (w) gesehen, und
eine Amplitude (a1) des ersten gekrümmten Abschnitts (8) zu einer Bezugslinie zwischen einem radialen Ende der Speichenplatte (5) in einem inneren Endabschnitt (13) der Speichenplatte (5), der ein Endabschnitt auf der Nabenseite ist, und dem anderen radialen Ende der Speichenplatte (5) in einem äußeren Endabschnitt (14) der Speichenplatte (5), der ein Endabschnitt auf der Laufflächenringseite ist, und eine Amplitude (a2) des zweiten gekrümmten Abschnitts (9) zu der Bezugslinie voneinander verschieden sind,
**dadurch gekennzeichnet, dass** ein Krümmungsradius (R2) des zweiten gekrümmten Abschnitts (9) gleich einem Krümmungsradius (R1) des ersten gekrümmten Abschnitts (8) ist.

2. Luftloser Reifen (1) nach Anspruch 1, wobei
die Amplitude (a1) des ersten gekrümmten Abschnitts (8) in einem gesamten Bereich der Speichenbreite (w) gleichmäßig ist, und
die Amplitude (a2) des zweiten gekrümmten Abschnitts (9) über den gesamten Bereich der Speichenbreite (w) gleichmäßig ist.

3. Luftloser Reifen (1) nach Anspruch 1, wobei die Amplitude (a2) des zweiten gekrümmten Abschnitts (9) größer als die Amplitude (a1) des ersten gekrümmten Abschnitts (8) ist.

4. Luftloser Reifen (1) nach einem der Ansprüche 1 bis 3, wobei eine Mittellinie (5c) der Speichendicke (t) in dem inneren Endabschnitt (13) und die Mittellinie (5c) der Speichendicke (t) in dem äußeren Endabschnitt (14) sich jeweils so erstrecken, dass sie an einem inneren Ende in dem inneren Endabschnitt (13) und an einem äußeren Ende in dem äußeren Endabschnitt (14) parallel zu der Reifenradialrichtung sind.

5. Luftloser Reifen (1) nach Anspruch 4, wobei die Mittellinie (5c) der Speichendicke (t) an dem inneren Ende in dem inneren Endabschnitt (13) und die Mittellinie (5c) der Speichendicke (t) an dem äußeren Ende in dem äußeren Endabschnitt (14), wie in Richtung der Speichenbreite (w) gesehen, auf der gleichen Geraden liegen.

6. Luftloser Reifen (1) nach Anspruch 4 oder 5, wobei
sich der innere Endabschnitt (13) so erstreckt, dass er in Bezug auf die Reifenaxialrichtung geneigt ist, und
der äußere Endabschnitt (14) sich so erstreckt, dass er in Bezug auf die Reifenaxialrichtung in der gleichen Richtung wie der innere Endabschnitt (13) geneigt ist.

7. Luftloser Reifen (1) nach einem der Ansprüche 1 bis 6, wobei jede der Speichenplatten (5) indirekt oder direkt mit dem Laufflächenring (2) und der Nabe (3) verbunden ist.

8. Luftloser Reifen (1) nach einem der Ansprüche 1 bis 7, wobei die Speiche (4) aus einem Polymermaterial gebildet ist.

9. Luftloser Reifen (1) nach Anspruch 8, wobei das Polymermaterial ausgewählt ist aus einem einzigen Elastomer, einem Verbundelastomer, das zwei oder mehr Elastomere enthält, und einem faserhaltigen Elastomer.

## Revendications

1. Bandage sans air (1) comprenant :
un anneau formant bande de roulement (2) ayant une surface de contact au sol (2a) ;
un moyeu (3) disposé à l'intérieur de l'anneau formant bande de roulement (2) dans une direction radiale du bandage et devant être fixé à un axe ; et
un rayon (4) destiné à connecter l'anneau formant bande de roulement (2) et
le moyeu (3), dans lequel
le rayon (4) inclut une pluralité de plaques de rayon (5),
chacune des plaques de rayon (5) a une première portion d'extrémité (6) s'étendant dans la direction radiale du bandage sur un côté d'extrémité dans une direction axiale du bandage, une seconde portion d'extrémité (7) s'étendant dans la direction radiale du bandage sur un autre côté d'extrémité dans la direction axiale du bandage, une largeur de rayon (w) mesurée le long d'une surface (5a) de la plaque de rayon (5) depuis la première portion d'extrémité (6) jusqu'à la seconde portion d'extrémité (7) à la même position dans la direction radiale du bandage, et une épaisseur de rayon (t) orthogonale à la largeur de rayon (w) et à la surface (5a) de la plaque de rayon (5),
chacune des plaques de rayon (5) inclut une première portion incurvée (8) incurvée de manière à se projette sur un côté dans une direction circonférentielle du bandage sur le côté du moyeu (3), et une seconde portion incurvée (9) incurvée de manière à se projeter sur un autre côté dans la direction circonférentielle du bandage sur le côté de l'anneau formant bande de roulement (2), dans une vue en direction de la largeur de rayon (w), et
une amplitude (a1) de la première portion incurvée (8) par rapport à une ligne de référence entre une extrémité radiale de la plaque de rayon (5) dans une portion d'extrémité intérieure (13) de la plaque de rayon (5), qui est une portion d'extrémité sur le côté du moyeu, et l'autre extrémité radiale de la plaque de rayon (5) dans une portion d'extrémité extérieure (14) de la plaque de rayon (5), qui est une portion d'extrémité sur le côté de l'anneau formant bande de roulement, et une amplitude (a2) de la seconde portion incurvée (9) par rapport à la ligne de référence sont différentes l'une de l'autre, **caractérisé en ce qu'**un rayon de courbure (R2) de la seconde portion incurvée (9) est égal à un rayon de courbure (R1) de la première portion incurvée (8).

2. Bandage sans air (1) selon la revendication 1, dans lequel
l'amplitude (a1) de la première portion incurvée (8) est uniforme dans toute une plage de la largeur de rayon (w), et
l'amplitude (a2) de la seconde portion incurvée (9) est uniforme dans toute la plage de la largeur de rayon (w).

3. Bandage sans air (1) selon la revendication 1, dans lequel l'amplitude (a2) de la seconde portion incurvée (9) est plus grande que l'amplitude (a1) de la première portion incurvée (8).

4. Bandage sans air (1) selon l'une quelconque des revendications 1 à 3, dans lequel
une ligne centrale (5c) de l'épaisseur de rayon (t) dans la portion d'extrémité intérieure (13) et la ligne centrale (5c) de l'épaisseur de rayon (t) dans la portion d'extrémité extérieure (14) s'étendent chacune de manière à être parallèles à la direction radiale du bandage au niveau d'une extrémité intérieure dans la portion d'extrémité intérieure (13) et au niveau d'une extrémité extérieure dans la portion d'extrémité extérieure (14).

5. Bandage sans air (1) selon la revendication 4, dans lequel la ligne centrale (5c) de l'épaisseur de rayon (t) au niveau de l'extrémité intérieure dans la portion d'extrémité intérieure (13) et la ligne centrale (5c) de l'épaisseur de rayon (t) au niveau de l'extrémité extérieure dans la portion d'extrémité extérieure (14) sont situées sur la même ligne droite dans une vue en direction de la largeur de rayon (w).

6. Bandage sans air (1) selon la revendication 4 ou 5, dans lequel
la portion d'extrémité intérieure (13) s'étend de manière à être inclinée relativement à la direction axiale du bandage, et
la portion d'extrémité extérieure (14) s'étend de manière à être incliné relativement à la direction axiale du bandage dans la même direction que la portion d'extrémité intérieure (13).

7. Bandage sans air (1) selon l'une quelconque des revendications 1 à 6, dans lequel chacune des plaques de rayon (5) est connectée indirectement ou directement à l'anneau formant bande de roulement (2) et au moyeu (3).

8. Bandage sans air (1) selon l'une quelconque des revendications 1 à 7, dans lequel le rayon (4) est formée à partir d'un matériau polymère.

9. Bandage sans air (1) selon la revendication 8, dans lequel le matériau polymère est sélectionné parmi un élastomère simple, un élastomère composite contenant deux ou plusieurs élastomères, et un élastomère contenant des fibres.
